# EUROPÄISCHE PATENTSCHRIFT

(11) **EP 1 459 182 B1**
(45) Veröffentlichungstag und Bekanntmachung des Hinweises auf die Patenterteilung: **04.10.2006**
(21) Anmeldenummer: 02795031.0
(22) Anmeldetag: 23.12.2002
(51) Int. Cl.: G06F 11/00, G05B 19/042

(54) **FEHLERTOLERANTES AUTOMATISIERUNGSSYSTEM BZW. VERFAHREN ZUR FEHLERBEHANDLUNG BEI EINEM ECHTZEIT-AUTOMATISIERUNGSSYSTEM**
ERROR TOLERANT AUTOMATION SYSTEM OR METHOD FOR ERROR TREATMENT IN A REAL TIME AUTOMATION SYSTEM
SYSTEME D'AUTOMATISATION INSENSIBLE AUX DEFAILLANCES ET PROCEDE DE TRAITEMENT D'ERREURS DANS UN SYSTEME D'AUTOMATISATION EN TEMPS REEL

(30) Priorität: 28.12.2001 DE 10164495
(43) Veröffentlichungstag der Anmeldung: 22.09.2004
(73) Patentinhaber: SIEMENS AKTIENGESELLSCHAFT, 80333 München (DE)
(72) Erfinder: KRAM, Raimund, 91056 Erlangen (DE); BIRZER, Johannes, 92551 Stulln (DE); HORN, Wolfgang, 09337 Hohenstein-Ernstthal (DE)
(86) Internationale Anmeldenummer: PCT/DE2002/004711
(87) Internationale Veröffentlichungsnummer: WO 2003/056428

(56) Entgegenhaltungen:
- STEWART D B ET AL: "The Chimera II real-time operating system for advanced sensor-based control applications" IEEE TRANSACTIONS ON SYSTEMS, MAN AND CYBERNETICS, NOV.-DEC. 1992, USA, Bd. 22, Nr. 6, Seiten 1282-1295, XP000355586 ISSN: 0018-9472
- STEWART D B ET AL: "Dynamically reconfigurable embedded software-does it make sense?" ENGINEERING OF COMPLEX COMPUTER SYSTEMS, 1996. PROCEEDINGS., SECOND IEEE INTERNATIONAL CONFERENCE ON MONTREAL, QUE., CANADA 21-25 OCT. 1996, LOS ALAMITOS, CA, USA,IEEE COMPUT. SOC, US, 21. Oktober 1996 (1996-10-21), Seiten 217-220, XP010201560 ISBN: 0-8186-7614-0
- TERRASA A ; GARCIA-FORNES A ; BOTTI V : "Including user-defined timing exception support in FRTL " PROCEEDINGS SEVENTH INTERNATIONAL CONFERENCE ON REAL-TIME COMPUTING SYSTEMS AND APPLICATIONS , 12. - 14. Dezember 2000, Seiten 255-262, XP009022132 Los Alamitos, CA, USA

## Beschreibung

Die Erfindung liegt auf dem Gebiet von Automatisierungssteuerungen bzw. Automatisierungssystemen. Automatisierungssysteme, bzw. -steuerungen werden insbesondere bei Produktionsmaschinen, Werkzeugmaschinen, Handhabungsautomaten, industriellen Prozessen und/oder in industriellen Fertigungen eingesetzt.

Automatisierungssysteme unterliegen verschiedensten Anforderungen, wie z.B. denen nach flexibler und/oder sicherer und/oder konsistenter Reaktion auf Ereignisse wie z.B.:
- Verarbeitungsfehler in einem Anwenderprogramm wie z.B. einer Division durch Null und/oder dem Verletzen von Arraygrenzen
- Zugriffsfehler bei I/O Variablen - Input/Output Variablen
- Zugriffsfehler beim Lesen und/oder Schreiben von Systemvariablen

Diese Anforderungen gelten insbesondere für ein frei programmierbares Automatisierungssystem bzw. -steuerung. Weist die Automatisierungssteuerung bzw. das Automatisierungssystem, wobei diese beiden Begriffe als Synonym füreinander stehen können, das Automatisierungssystem allerdings auch eine Automatisierungssteuerung mit aufweisen kann, Multitasking-Eigenschaften auf so verschärfen sich die Anforderungen. Dies gilt beispielsweise für ein frei programmierbares Automatisierungssystem für eine Produktionsmaschine, wie z.B. eine Druckmaschine, eine Kunststoffspritzgießmaschine mit Multitasking-Eigenschaften, die aufgrund integrierter Technologie- und Regelungsfunktionalität harten Echtzeiteigenschaften zu genügen hat. Echtzeiteigenschaften sind beispielsweise auch bei einer Werkzeugmaschine, wie z.B. einer Drehmaschine, einer Schleifmaschine, einer Fräsmaschine, etc. oder auch bei einem oder mehreren in einem Verbund arbeitenden Handhabungsautomaten erforderlich.

Die Automatisierungssteuerung bzw. das Automatisierungssystem weist Software auf, wobei in dieser Software Tasks, d.h. Aufgaben bzw. Programme, bzw. Jobs gestartet und abgearbeitet werden, bzw. abarbeitbar sind. In einer Automatisierungssteuerung bzw. in einem Automatisierungssystem sind die obig beschriebenen Anforderungen insbesondere dann, wenn annähernd Echtzeitanforderungen zu erfüllen sind, bisher über synchrone Exceptions gelöst. Bei der synchronen Exception wird zumindest ein Anwenderprogramm, als Fehlerreaktion, unmittelbar mit der gleichen Priorität gestartet wie der bearbeitete Task, in dem ein Fehler aufgetreten ist.

Nachteilig bei dieser Lösung ist, dass die Lösung mit synchronen Exceptions in einem Automatisierungssystem bzw. in einer Automatisierungssteuerung mit hochprioren zyklischen Tasks nur bedingt einsetzbar ist, da die Gesamtlaufzeit der hochprioren zyklischen Taskebenen begrenzt ist. Beim Überschreiten dieser Begrenzung geht die Echtzeiteigenschaft verloren. Bei der Verwendung von synchronen Exceptions ist ein Echtzeit-Automatisierungssystem nicht realisierbar, da die Echtzeit nicht in jedem Fall garantiert ist. Allgemein tritt diese Problematik auch bei anderen Echtzeitsystemen auf, bei welchen hochpriore Tasks in einer maximalen Gesamtlaufzeit, welche für die Abarbeitung notwendig ist, abzuarbeiten sind.

Aus dem Artikel von D. B. Stewart et al.: "The Chimera II Real-Time Operating System for Advanced Sensor-Based Control Applications", IEEE Transactions on Systems, Man and Cybernetics, November bis Dezember 1992, USA, Band 22, Nr. 6, Seiten 1282 bis 1295, ISSN 0018-9472 ist bekannt, in einem Echtzeit-Automatisierungssystem den Zeitablauf von bestimmten Tasks zu verfolgen. Erfüllen einzelne Tasks eine Zeitvorgabe nicht, wird eine optionale Funktion aufgerufen, die so programmiert sein, dass sie auch mit unterschiedlicher Priorität als die eine Zeitvorgabe nicht erfüllende Task abläuft. Auch im Zusammenhang mit Verarbeitungsfehlern und Zugriffsfehlern ist der Aufruf einer zusätzlichen Funktion offenbart. Im Regelfall bewirkt diese Zusatzfunktion das Ausdrucken einer Fehlernachricht und den Abbruch der fehlerbehafteten Tasks.

In dem Artikel von D. B. Stewart et al.: "Dynamically Reconfigurable Embedded Software - Does It Make Sense?", Engineering of Complex Computer Systems, 1996. Proceedings, Second IEEE International Conference on Montreal, Quebec, Canada 21. bis 25. Oktober 1996, Los Alamitos, CA, USA, IEEE Comput.Soc, US, 21. Oktober 1996, Seiten 217 bis 220, ISBN: 0-8186-7614-0 wird zwischen der Handhabung von Fehlern mit niedriger Priorität und mit hoher Priorität unterschieden.

Der Erfindung liegt die Aufgabe zugrunde, die Reaktion auf Fehler, welche in der Software (z.B. Division durch Null oder Verletzung von Arraygrenzen) und/oder Hardware (z.B. Zugriffsfehler bei I/O-Variablen) einer Automatisierungssteuerung bzw. einem Automatisierungssystem auftreten zu verbessern. Automatisierungssysteme, bzw. -steuerungen werden insbesondere bei Produktionsmaschinen, Werkzeugmaschinen, Handhabungsautomaten, industriellen Prozessen und/oder in industriellen Fertigungen eingesetzt.

Eine Fehlerreaktion ist erfindungsgemäß dadurch erzielbar, dass zur Fehlerbehandlung bei einem Automatisierungssystem, welches zumindest zwei Ablaufebenen aufweist, durch zumindest einen Verarbeitungsfehler und/oder Zugriffsfehler in einer Ablaufebene zumindest eine Fehlerreaktionsfunktion in zumindest einer der weiteren Ablaufebenen ausgelöst wird.

Dadurch, dass für eine Fehlerreaktionsfunktion eine weitere Ablaufebene, welche eine unterschiedliche Priorität zur ursprünglichen Ablaufebene hat, genutzt wird, ist es möglich die zeitliche Abfolge von Programmen bzw. Funktionen zu beeinflussen. Vorteilhafterweise ist die Wahl der Ablaufebene für die Fehlerreaktionsfunktion programmierbar bzw. parametrierbar.

In einer vorteilhaften Ausgestaltung des Verfahrens zur Fehlerbehandlung wird eine Fehlerreaktionsfunktion jeweils in der weiteren Ablaufebene behandelt, welche niederpriorer zu der jeweiligen Ablaufebene ist, in welcher der Verarbeitungsfehler und/oder der Zugriffsfehler aufgetreten ist. Dies hat den Vorteil, dass durch den Fehler der zeitliche Ablauf dessen, in welchem der Fehler aufgetreten ist im wesentlichen unbeeinflusst bleibt. Unter Umständen kann jedoch beispielsweise ein einfacher zeitunkritischer Befehl wie die Übernahme eines zuletzt zulässigen Wertes, bei Auftreten eines unzulässigen Wertes durchgeführt werden.

Durch den Verarbeitungsfehler und/oder den Zugriffsfehler wird auch eine Fehlerreaktionsfunktion in derselben Ablaufebene wie der Verarbeitungsfehler und/oder Zugriffsfehler ausgelöst.

So ist zunächst eine sichere Weiterbearbeitung des Programmes bzw. der Funktion in welcher der Fehler aufgetreten ist gewährleistet ohne, dass beispielsweise bezüglich der Einhaltung von Echtzeiterfordernissen Probleme entstehen. Eine nicht mehr so zeitkritische Fehlerbehandlung erfolgt dann durch die in einer niederprioreren Ablaufebene gestarteten Fehlerreaktionsfunktion.

Erfindungsgemäß erfolgt die Durchführung des Verfahrens zur Fehlerbehandlung bei einem Echtzeit-Automatisierungssystem.

Das erfindungsgemäße Verfahren zur Fehlerbehandlung wird also bei Echtzeit-Anforderungen angewandt und erfüllt diese auch. Dies gilt insbesondere für ein Automatisierungssystem mit hochprioren zyklischen Tasks, wobei die Regelungsgüte gewährleistet bleibt. Hohe Anforderungen an Regelgüte und Dynamik eines Automatisierungssystems bleiben gewahrt.

In einer vorteilhaften Ausgestaltung wird die Fehlerreaktionsfunktion vor dem Auslösen dieser, parametriert und/oder programmiert .

Eine Anforderung nach einer flexiblen, sicheren und/oder konsistenten Reaktion auf Fehler ist durch einen durchgängigen konsistenten Gesamtansatz zur Fehlerbehandlung mittels der Definition / Realisierung von:
- Zugriffsfunktionen und/oder
- eines definierten konfigurierbaren Ablaufverhaltens bei Zugriffsfehler bei Nichtanwendung der Zugriffsfunktion und/oder
- eines definierten Verhaltens bei Auftreten von Verarbeitungsfehlern in einem Anwenderprogramm
erfindungsgemäß ermöglicht.

Bei der Definition bzw. Realisierung von Zugriffsfunktionen sind Zugriffsfehler über parametrierbare Zugriffsfunktionen abfangbar, wobei in vorteilhafter Weise die Möglichkeit besteht, bei einem Fehler ein vordefiniertes Verhalten zu erzeugen. Beispiele hierfür sind die Übernahme eines projektierten Ersatzwert, die Übernahme des letzten Wertes und/oder auch das Einsetzen eines Grenzwertes. Das Verhalten der Zugriffsfunktion über Parameter ist vor deren Aufruf bzw. auch unmittelbar beim Aufruf einstellbar. Die Festlegung eines vordefinierten Verhaltens bei einem Fehler einer Zugriffsfunktion ist eine Fehlerreaktionsfunktion. Die Ausführung der Zugriffsfunktion bedingt bei einem Zugriffsfehler nicht zwangsläufig den Start eines Fehlerbearbeitungs-Task, d.h. einer Fehlerreaktionsfunktion welche synonym ist, jedoch ist eine Fehlerreaktionsfunktion ausführbar. Die Zugriffsfunktion ist vorteilhaft in verschiedenen, vorzugsweise jedem, Tasktyp verwendbar.

Beim Auftreten eines Fehlers beispielsweise bei einem Zugriff auf einen internen bzw. externen Wert und einer Nichtanwendung der Zugriffsfunktion ist vorteilhaft ein definiertes konfigurierbares Ablaufverhalten bei zumindest einem Zugriffsfehler realisierbar. Wenn ein Zugriffsfehler auftritt, ohne dass eine Zugriffsfunktion verwendet wird, wird vom Automatisierungssystem bzw. der Automatisierungssteuerung ein konfiguriertes Verhalten wie z.B. die Übernahme des Ersatzwertes, die Übernahme des letzten Wertes, oder der Start einer Fehlerbearbeitungs-Task, in der die Reaktion flexibel ausprogrammiert werden kann, ausgeführt.

Tritt in einem Anwenderprogramm ein Verarbeitungsfehler auf so ist ein definiertes einstellbares Verhalten bezüglich des Verarbeitungsfehlers erfindungsgemäß ermöglicht. Hierfür ergeben sich beispielsweise die folgenden Möglichkeiten:
- Start der Fehlerbearbeitungs-Task, d.h. der Fehlerreaktionsfunktion, bei einem Verarbeitungsfehler im Anwenderprogramm;
- oder direktes Überführen des Automatisierungssystems in den Stop-Zustand.

Die Fehlerbearbeitungs-Task, d.h. die Fehlerreaktionsfunktion weist dabei beispielsweise eine der folgenden Eigenschaften auf:
- in der Fehlerbearbeitungs-Task/Fehlerreaktionsfunktion kann ein Anwenderprogramm zur Reaktion auf den Verarbeitungsfehler oder Zugriffsfehler eingehängt werden;
- der Fehlerbearbeitungs-Task/Fehlerreaktionsfunktion wird in einer Task-Startinformation mitgegeben, in welcher Task der Fehler aufgetreten ist und von welcher Art der Zugriffsfehler oder der Bearbeitungsfehler ist;
- die Fehlerbearbeitungs-Task/Fehlerreaktionsfunktion weist im Ablaufsystem eine definierte Priorität auf, wobei diese im Automatisierungssystem hochpriore zyklische Tasks, z.B. von Motion Control (Bewegungssteuerung), nicht behindert; die Priorität der Fehlerbearbeitungs-Task ist dabei wahlweise fest oder auch einstellbar, jedoch unterhalb der Prioritätsstufe der hochprioren zyklischen Tasks für z.B. eine Bewegungssteueuerung und/oder eine andere Regelung;
- der Start der Fehlerbearbeitungs-Task/Fehlerreaktionsfunktion führt zu Stop und Abbruch der Task, in deren Anwenderprogramm der Fehler aufgetreten ist;
- nicht-zyklische Tasks können über eine Programmierung in dem Fehlerbearbeitungs-Task/Fehlerreaktionsfunktion neu gestartet werden.

Damit ist ein konsistentes System- und Ablaufverhalten auch in harten Echtzeitsystemen erreichbar.

Durch die erfindungsgemäße Ausgestaltung eines Automatisierungssystems sind Zugriffsfehler direkt in flexible parametrierbare Zugriffsfunktionen abfangbar. Reaktionen auf Zugriffsfehler und Verarbeitungsfehler sind auch in einer Fehlerreaktionsfunktion programmierbar, wobei die Fehlerreaktionsfunktion im Fehlerfall gestartet wird. Die erfindungsgemäße Fehlerbehandlung ist vorteilhafterweise verbunden mit dem Nichtabbruch oder der Nichtbeeinflussung hochpriorer zyklischer Systemtasks, wie diese z.B. bei Motion Control-Aufgaben auftreten. Derartige Aufgaben sind beispielsweise eine Interpolation und/oder eine Regelung.

Mit Hilfe der erfindungsgemäßen Fehlerbehandlung ist ein sicheres Systemverhalten des Automatisierungssystem auch dadurch erreichbar, dass der Task beendbar ist, in welchem ein Fehler aufgetreten ist. In vorteilhafter Weise sind nichtzyklische Tasks neu aufsetzbar, d.h. startbar. Beim Neuaufsetzen nicht-zyklischer Tasks werden entweder die Startwerte des ursprünglichen Tasks verwendet oder aber Zwischenergebnisse des abgebrochenen Tasks.

Die erfindungsgemäße Fehlerbehandlung ist vorteilhafterweise verbunden mit dem Absteuern, d.h. Herunterfahren bzw. Stoppen des Systems bei Auftreten zumindest eines Fehlers in einem zyklischen Task, da in diesem Fall die wiederholte Abarbeitung und/oder der Abbruch des zyklischen Tasks nicht unbedingt sinnvoll ist. In vorteilhafter Weise wird erfindungsgemäß ein konsistentes Systemverhalten erreicht, auch dann, wenn das System nicht in Stop geht.

In einer vorteilhaften Weise wird erfindungsgemäß die maximal zulässige Gesamtlaufzeit eines hochprioren zyklischen Tasks nicht überschritten um eine vereinbarte Regelungs- und/oder Steuerungsgüte zu gewährleisten. Dies gilt insbesondere bei Automatisierungssteuerungen und/oder Automatisierungssystemen, wobei diese Begriffe gleichbedeutend benutzbar sind, mit harten Echtzeitanforderungen.

Das erfindungsgemäße Automatisierungssystem ist vorteilhaft bei einer Produktionsmaschine und/oder einer Werkzeugmaschine eingesetzt.

Weitere vorteilhafte Ausführungen bzw. eine Verwendung und/oder Vorrichtung zur Erfindung sind den Ansprüchen 1 bis 15 entnehmbar.

Ausführungsbeispiele zur Erfindung sind in den Figuren dargestellt. Dabei zeigen
- Figur 1: unterschiedliche ablaufebenen zur Ausführung von Software in einem Automatisierungssystem und
- Figur 2: Fehlerreaktionsfunktionen verteilt in Ablaufebenen.

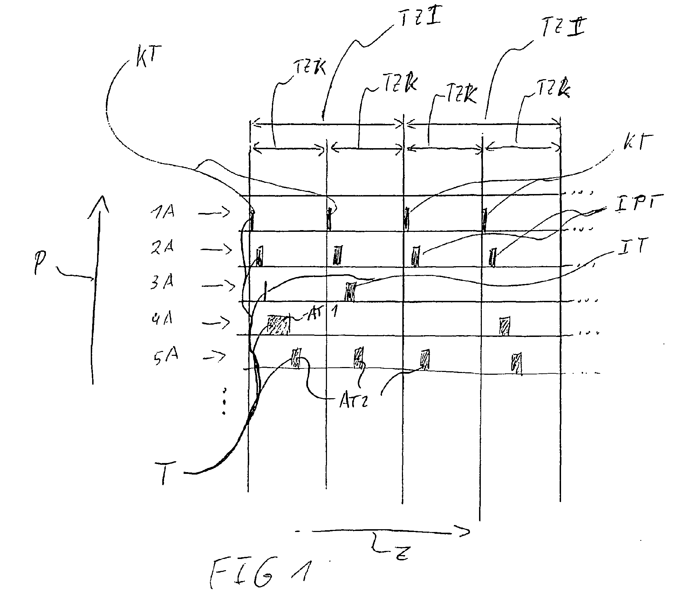

Die Darstellung gemäß FIG 1 zeigt fünf verschieden Ablaufebenen 1A, 2A, 3A, 4A und 5A zur Ausführung von Software eines Automatisierungssystems. Eine Priorität P - in der Figur 1 als Pfeil dargestellt, ist von der Ablaufebene 5A bis zur Ablaufebene 1A ansteigend. Abzuarbeitende Tasks T sind in den Ablaufebenen 1A bis 5A als Balken dargestellt und bezüglich einer Zeitachse Z aufgetragen. Hoch priore Funktionen d.h. Tasks wie z.B. Kommunikationstasks KT werden in der Ablaufebene 1A ausgeführt. Die Kommunikationstasks KT wiederholen sich zyklisch in einem Taktzyklus TZK für die Kommunikation. In einem weiteren Taktzyklus TZI erfolgt die Abarbeitung z.B. für eine Interpolation z.B. einer Werkzeugmaschine oder einer Produktionsmaschine. Die Funktion für die Interpolation wird im Interpolations-Task ausgeführt, wobei die Ausführung in einer zur Ablaufebene 1A niederen Priorität in der Ablaufebene 2A erfolgt. Der Ablaufebene 3A sind Interrupt-Tasks IT zugewiesen. Anwendertasks AT1 und AT2 sind entsprechend ihrer Wichtigkeit den Ablaufebenen 4A und 5A zugeordnet.

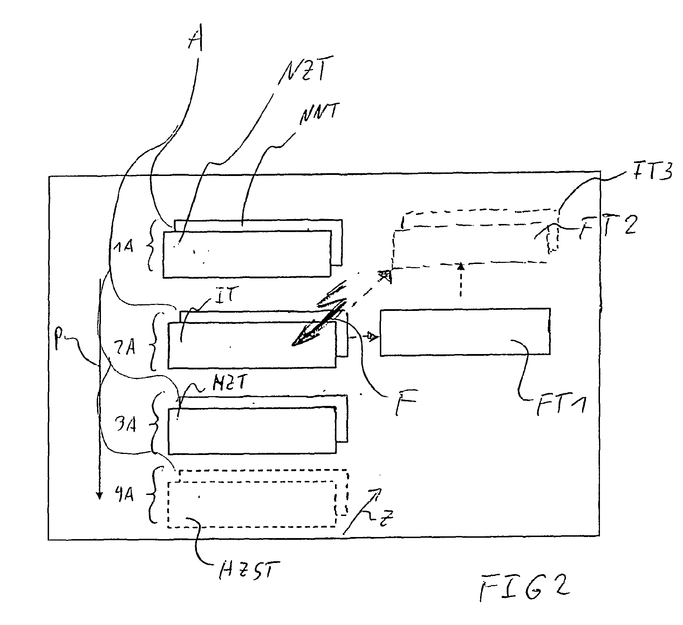

Die Darstellung gemäß Figur 2 zeigt beispielhaft verschiedene Tasks NZT, NNT, IT, HZT, HZST und FT, welche in einem Automatisierungssystem ablauffähig sind. Der Begriff Task ist dabei z.B. im Sinne des Begriffs Funktion anwendbar, wobei die Funktion zumindest eine Aufgabe beinhaltet. Eine Funktion ist jedoch auch in verschiede Tasks unterteilbar. In der FIG 2 sind die folgenden Tasks aufgeführt, wobei diese unterschiedliche Prioritäten aufweisen:
- niederpriorer zyklischer Task NZT
- nichtzyklische Tasks NNT
- Fehlerbearbeitungs-Task FT1, FT2, FT3
- Interrupt Tasks IT
- Hochpriore zyklische Tasks HZT
- Hochpriore zyklische System Tasks HZST.

Der Fehlerbearbeitungs-Task entspricht einer Fehlerreaktionsfunktion. Die Tasks NZT, NNT, IT, HZT, HZST und FT sind Ablaufebenen A zugewiesen, wobei die Ablaufebenen A unterschiedliche Prioritäten P bezüglich der Bearbeitung aufweisen und in die Ablaufebenen 1A, 2A, 3A und 4A unterteilt sind. Die Priorität P, welche als nach unten weisender Pfeil dargestellt ist, nimmt in Pfeilrichtung zu. Die Tasks werden durch rechteckige Kästchen repräsentiert, wobei jedem Kästchen zumindest eine Task zugeordnet ist. Die zeitliche Aufeinanderfolge der Tasks NZT, NNT, IT, HZT, HZST und FT1/2/3 erfolgt durch die perspektivische Darstellung in Bezug auf eine als Pfeil dargestellte Zeitachse Z.

Die Fehlerbearbeitungstasks FT1, FT2, FT3 sind der Priorität nach, verschiedenen Ablaufebenen 1A und 2A zugeordnet. In den entsprechenden Ablaufebenen A finden sich auch die Interrupt Tasks IT und/oder die niederprioren zyklischen Tasks NZT und/oder die niederprioren nichtzyklischen Tasks NNT nebengestellt.

Bei den folgenden Tasks: niederpriorer zyklischer Task NZT niederpriorer nichtzyklischer Task NNT, interrupt Task IT, hochpriorer zyklischer Task HZT und dem Fehlerbearbeitungstask können Zugriffsfunktionen in allen Anwendertasks verwendet werden.

Tritt beispielsweise ein Fehler F in der Ablaufebene 2A des Interrupt Tasks IT auf, so ist eine Fehlerbearbeitungstask FT1 in derselben Ablaufebene 2A startbar. Durch den Fehler kann jedoch auch eine Fehlerbearbeitungstask FT2 bzw. FT3 in einer niederpriorenren Ablaufebene 1A gestartet werden. Das Starten einer niederprioreren Fehlerbearbeitungtask FT2, FT3 kann auch durch eine andere Fehlerbearbeitungstask FT1 erfolgen. Die Ausführung von Fehlerbearbeitungstasks FT1, FT2, d.h. von Fehlerreaktionsfunktionen in einer niederprioreren Ablaufebene spart Rechenzeit eines Rechners für höherpriore Tasks. Damit ist ein Echtzeit-Automatisierungssystem realisierbar. Dieses genügt auch harten Echtzeitanforderungen inbesondere im Fehlerfall.

## Patentansprüche

1. Verfahren zur Fehlerbehandlung bei einem Echtzeit-Automatisierungssystem, welches zumindest zwei Ablaufebenen (a, 1A, 2A, 3A, 4A, 5A) aufweist, die unterschiedliche Prioritäten aufweisen, bei dem durch zumindest einen Verarbeitungsfehler (F) und/oder Zugriffsfehler (F) in einer Ablaufebene (A) zumindest eine Fehlerreaktionsfunktion (FT1, FT2, FT3) ausgelöst wird,
**dadurch ge-kennzeichnet, dass** durch den Verarbeitungsfehler (F) und/oder den Zugriffsfehler (F) eine Fehlerreaktionsfunktion (FT1, FT2, FT3) in derselben Ablaufebene (A) wie der Verarbeitungsfehler (F) und/oder Zugriffsfehler (F) ausgelöst wird und dass eine weitere Fehlerreaktionsfunktion (FT1, FT2, FT3) in zumindest einer niederprioreren Ablaufebene (A) ausgelöst wird.

2. Verfahren nach Anspruch 1 **dadurch gekennzeichnet, dass** die Fehlerreaktionsfunktionen (FT1, FT2, FT3) vor dem Auslösen parametriert und/oder programmiert werden.

3. Verfahren nach einem der Ansprüche 1 bis 2,
**dadurch gekennzeichnet , dass** zumindest hochpriore zyklische Systemfunktionen (HZST) durch die Fehlerreaktionsfunktionen (FT1, FT2, FT3) unbeeinflusst ausgeführt werden.

4. Verfahren nach einem der vorgenannten Ansprüche 1 bis 3,
**dadurch gekennzeichnet, dass** zumindest hochpriore zyklische Systemfunktionen (HZST) auch bei Ausführung einer Fehlerreaktionsfunktion (FT1, FT2, FT3) abbruchslos weitergeführt werden.

5. Verfahren nach einem der vorgenannten Ansprüche 1 bis 4,
**dadurch gekennzeichnet, dass** Funktionen, welche eine Fehlfunktion (F) aufweisen, abgebrochen werden, wodurch ein sicheres Verhalten des Automatisierungssystems gewährleistet ist.

6. Verfahren nach einem der vorgenannten Ansprüche 1 bis 5,
**dadurch gekennzeichnet, dass** abgebrochene nichtzyklische Funktionen (NNT) neu gestartet werden, wobei dabei auf die jeweils vorangegangene abgebrochene Funktion (NNT) aufgesetzt wird.

7. Verfahren nach einem der vorgenannten Ansprüche 1 bis 5,
**dadurch gekennzeichnet, dass** bei Fehlern (F) in zyklischen Funktionen (NZT, HZT) das Automatisierungssystem gestoppt wird.

8. Verfahren nach einem der vorgenannten Ansprüche 1 bis 6,
**dadurch gekennzeichnet, dass** beim Auftreten von Fehlern (F) durch das Automatisierungssystem ein konsistentes Systemverhalten erzeugt wird ohne das Automatisierungssystem zu stoppen.

9. Verwendung des Verfahrens nach einem der vorgenannten Ansprüche, **dadurch gekennzeichnet,**
**dass** die Verwendung bei einer Werkzeugmaschine und/oder einer Produktionsmaschine erfolgt.

10. Echtzeit-Automatisierungssystem zur Durchführung des Verfahrens nach einem der Ansprüche 1-8.

## Claims

1. Method for error handling in the case of a real-time automation system which has at least two execution levels (1A, 2A, 3A, 4A, 5A), which have different priorities, in which method at least one error reaction function (FT1, FT2, FT3) is triggered by at least one processing error (F) and/or at least one access error (F) on one execution level (A), **characterized in that** an error reaction function (FT1, FT2, FT3) is triggered by the processing error (F) and/or the access error (F) on the same execution level (A) as the processing error (F) and/or access error (F), and **in that** a further error reaction function (FT1, FT2, FT3) is triggered on at least one execution level (A) of lower priority.

2. Method according to Claim 1, **characterized in that** the error reaction functions (FT1, FT2, FT3) are parameterized and/or programmed before triggering.

3. Method according to one of Claims 1 and 2, **characterized in that** at least high-priority cyclical system functions (HZST) are executed without being influenced by the error reaction functions (FT1, FT2, FT3).

4. Method according to one of the preceding Claims 1 to 3, **characterized in that** at least high-priority cyclical system functions (HZST) are also continued without being aborted when an error reaction function (FT1, FT2, FT3) is executed.

5. Method according to one of the preceding Claims 1 to 4, **characterized in that** functions which have an error function (F) are aborted, whereby reliable behavior of the automation system is ensured.

6. Method according to one of the preceding Claims 1 to 5, **characterized in that** aborted non-cyclical functions (NNT) are restarted, taking the respectively preceding terminated function (NNT) as a basis.

7. Method according to one of the preceding Claims 1 to 5, **characterized in that**, in the event of errors (F) in cyclical functions (NZT, HZT), the automation system is stopped.

8. Method according to one of the preceding Claims 1 to 6, **characterized in that**, when errors (F) occur due to the automation system, consistent system behavior is produced without stopping the automation system.

9. Use of the method according to one of the preceding claims, **characterized in that** it is used in the case of a machine tool and/or a production machine.

10. Real-time automation system for carrying out the method according to one of Claims 1 - 8.

## Revendications

1. Procédé de traitement d'erreurs dans un système d'automatisation en temps réel qui comporte au moins deux niveaux d'exécution (a, 1A, 2A, 3A, 4A, 5A) qui ont des priorités différentes, dans lequel au moins une erreur de traitement (F) et/ou erreur d'accès (F) dans un niveau d'exécution (A) déclenche au moins une fonction (FT1, FT2, FT3) de réaction aux erreurs, **caractérisé par le fait que** l'erreur de traitement (F) et/ou l'erreur d'accès (F) déclenche une fonction (FT1, FT2, FT3) de réaction aux erreurs dans le même niveau d'exécution (A) que l'erreur de traitement (F) et/ou l'erreur d'accès (F) et que l'on déclenche une autre fonction (FT1, FT2, FT3) de réaction aux erreurs dans au moins un niveau d'exécution (A) moins prioritaire.

2. Procédé selon la revendication 1, **caractérisé par le fait que** l'on paramètre et/ou programme les fonctions (FT1, FT2, FT3) de réaction aux erreurs avant leur déclenchement.

3. Procédé selon l'une des revendications 1 ou 2, **caractérisé par le fait que** l'on exécute au moins des fonctions de système cycliques très prioritaires (HZST) sans être influencé par les fonctions (FT1, FT2, FT3) de réaction aux erreurs.

4. Procédé selon l'une des revendications précédentes 1 à 3, **caractérisé par le fait que** l'on continue à exécuter sans interruption au moins des fonctions de système cycliques très prioritaires (HZST) même lors de l'exécution d'une fonction (FT1, FT2, FT3) de réaction aux erreurs.

5. Procédé selon l'une des revendications précédentes 1 à 4, **caractérisé par le fait que** l'on interrompt des fonctions qui présentent un dysfonctionnement (F), ce qui garantit un comportement fiable du système d'automatisation.

6. Procédé selon l'une des revendications précédentes 1 à 5, **caractérisé par le fait que** l'on redémarre des fonctions non cycliques interrompues (NNT) en s'appuyant ce faisant sur la fonction interrompue (NNT) respectivement précédente.

7. Procédé selon l'une des revendications précédentes 1 à 5, **caractérisé par le fait que**, en présence d'erreurs (F) dans des fonctions cycliques (NZT, HZT), on arrête le système d'automatisation.

8. Procédé selon l'une des revendications précédentes 1 à 6, **caractérisé par le fait que**, lorsque des erreurs (F) apparaissent, on produit dans le système d'automatisation un comportement de système consistant sans arrêter le système d'automatisation.

9. Utilisation du procédé selon l'une des revendications précédentes, **caractérisée par le fait que** l'utilisation s'effectue dans une machine-outil et/ou dans une machine de production.

10. Système d'automatisation en temps réel pour la mise en oeuvre du procédé selon l'une des revendications 1 à 8.
